# EUROPÄISCHE PATENTANMELDUNG

(11) **EP 3 623 767 A1**
(43) Veröffentlichungstag der Anmeldung: **18.03.2020**
(21) Anmeldenummer: 18194806.8
(22) Anmeldetag: 17.09.2018
(51) Int. Cl.: G01D 5/20

(54) **WELLE UND VERFAHREN ZUR HERSTELLUNG EINER WELLE, ROTOR UND ELEKTRISCHE MASCHINE**

(71) Anmelder: Siemens Aktiengesellschaft, 80333 München (DE)
(72) Erfinder: Piechniczek, Frank, 16761 Hennigsdorf (DE); Sczodrok, Richard, 13627 Berlin (DE); Hübner, Lutz, 14165 Berlin (DE)

(57) **Zusammenfassung**

Die Erfindung betrifft eine Welle (1) mit einem Abtastbereich (3). Die Welle (1) ist vorteilhaft Teil einer elektrischen Maschine (13) mit einem Magnetlager (14). Der Abtastbereich (3) der Welle (1) ist als Mantelfläche einer Messschicht (11) ausgebildet. Die Messschicht (11) ist mit der Oberfläche (7) eines Grundkörpers (1a) der Welle (1) über eine Pufferschicht (9) verbunden. Die Pufferschicht (9) und die Messschicht (11) werden vorzugsweise mit Hilfe eines Schweiß-Verfahrens auf die Oberfläche (7) des Grundkörpers (1a) beziehungsweise auf die Pufferschicht (9) aufgebracht. Die Messschicht (11) ist vorzugsweise aus einem austenitischen Material ausgebildet. Vorzugsweise sind die Pufferschicht (9) und die Messschicht (11) in einer Aussparung (5) des Grundkörpers (1a) der Welle positioniert, so dass die Welle (1) eine Mantelfläche mit konstantem Radius und einer bündigen Oberfläche aufweist.

## Beschreibung

Die Erfindung betrifft eine Welle und ein Verfahren zur Herstellung einer Welle. Darüber hinaus betrifft die Erfindung einen Rotor einer elektrischen Maschine sowie eine elektrische Maschine.

Besonders schnell drehende elektrische Maschinen im industriellen Einsatz weisen oft sogenannte Magnetlager auf. Ein Magnetlager hält eine Welle als Teil eines Rotors der elektrischen Maschine berührungslos in einer Position und Ausrichtung. Die Welle wird in einer Öffnung gehalten, deren Innendurchmesser nur geringfügig größer als der Außendurchmesser der Welle ist.

Durch den geringen Abstand zwischen der Innenseite der Öffnung und der Mantelfläche des Körpers muss insbesondere die Ausrichtung des Körpers sehr gut geregelt sein.

Zur Verbesserung der Regelung findet eine Messung der Position und/oder der Ausrichtung mit Hilfe von zumindest einem Sensor statt.

Die Sensoren tasten hierbei die Oberfläche des Körpers in einem Abtastbereich des Körpers ab. Der Abtastbereich ist bei einer Welle als Bereich der Mantelfläche der Welle ausgebildet.

EP 3 203 191 A1 betrifft einen Sensor für ein Magnetlager, wobei der Sensor eine Welle mit einem Sensortarget abtastet.

Spannungen im Material oder eine inhomogene Materialstruktur im Bereich des Abtastbereiches können sich nachteilig auf die Messgenauigkeit der Sensoren auswirken.

Daher ist es Aufgabe der Erfindung, eine besonders gut abtastbare Welle bereitzustellen.

Die Aufgabe wird durch eine Welle nach Anspruch 1 gelöst. Weiter wird die Aufgabe durch ein Verfahren nach Anspruch 9 gelöst. Weiter wird die Aufgabe durch einen Rotor einer elektrischen Maschine nach Anspruch 12 und durch eine elektrische Maschine nach Anspruch 13 gelöst.

Vorteilhafte Ausgestaltungen und Weiterbildungen der Erfindung sind Gegenstand der abhängigen Ansprüche.

Die Erfindung gründet auf der Idee, einen besonders glatten und homogenen Bereich auf einer Welle bereitzustellen. Der Bereich wird hier als Abtastbereich bezeichnet, weil in diesem Bereich mit Hilfe von zumindest einem Sensor die Position und/oder die Ausrichtung der Welle festgestellt werden.

Nachteilig am bisherigen Stand der Technik war, dass sich Materialien, welche sich zur Abtastung eignen, nur mit einer unzureichenden Festigkeit mit einer Welle verbinden lassen. Bei sehr hohen Drehzahlen der Welle ist jedoch eine feste Verbindung der Materialien bedeutsam.

Im Rahmen dieses Dokuments wird die Bezeichnung Schicht für die Messschicht und/oder die Pufferschicht verwendet.

Darüber umfasst die Welle den Grundkörper, wobei der Grundkörper mit den Schichten vorteilhaft die Welle ausbildet.

Daher schlägt die Erfindung vor, eine Pufferschicht auf eine Oberfläche eines Grundkörpers aufzubringen und auf die Pufferschicht eine besonders gut abtastbare Messschicht aufzubringen. Vorzugsweise erfolgt ein Aufbringen mittels eines Schweißverfahrens. Durch das Schweißverfahren entsteht vorteilhaft eine besonders feste Verbindung der Schichten untereinander sowie der Schichten mit dem Grundkörper der Welle. Vorzugsweise mit Hilfe einer Drehmaschine kann eine Aussparung in einen Grundkörper der Welle eingebracht werden.

Bevorzugt verbindet sich die Pufferschicht besonders gut mit dem Material des Grundkörpers der Welle sowie mit dem Material der Messschicht. Vorzugsweise wird die Pufferschicht aufgeschweißt. Als Schweißmaterial wird vorzugsweise eine Legierung mit der Bezeichnung 1.4332 verwendet.

Insbesondere eignet sich für eine Pufferschicht eine Schicht, welche zwei Lagen aufweist. Vorzugsweise werden die Lagen nacheinander auf den Grundkörper aufgetragen. Hierbei dient eine erste Lage zur Ausbildung einer festen Verbindung mit dem Werkstoff des Grundkörpers, insbesondere der Welle.

Die erste Lage der Pufferschicht wird vorteilhaft auf den Grundkörper, insbesondere auf die Innenfläche einer Aussparung des Grundkörpers aufgebracht. Die zweite Lage wird vorteilhaft auf die erste Lage aufgebracht. Die zweite Lage bedeckt vorzugsweise die erste Lage.

Eine zweite Lage dient vorzugsweise zur Abschirmung des Grundkörpers. Die zweite Lage dient vorteilhaft zu einer Enthärtung der Oberfläche der ersten Lage.

Vorzugsweise erfolgt das Aufbringen der jeweiligen Schicht mit einem Fülldraht. Vorteilhaft weist der verwendete Fülldraht einen geringen Durchmesser auf. Vorzugsweise ist ein geringer Durchmesser unterhalb von 2,4 Millimeter, vorzugsweise unterhalb von 1,6 Millimeter, gekennzeichnet.

Für die Pufferschicht eignet sich sowohl für die erste Schicht als auch für die zweite Lage eine Eisenlegierung, insbesondere ein Chrom-Nickelstahl (CrNi-Stahl) mit einem geringen Kohlenstoffgehalt. Vorzugsweise umfasst ein solcher CrNi-Stahl 0,3% Kohlenstoff; 0,7% Silizium; 1,4% Mangan; 23% Chrom und 12,5% Nickel.

Besonders vorteilhaft erfolgt ein Vorwärmen der Oberfläche des Grundkörpers im Bereich der aufzubringenden Schicht.

Die Messschicht ist vorzugsweise als austenitische Schicht ausgebildet. Die Messschicht wird vorzugsweise auf die Pufferschicht mit Hilfe eines Schweißverfahrens aufgebracht.

Vorzugsweise erfolgt das Aufschweißen der Messschicht mit Hilfe von einem Unterpulver-Verfahren.

Ein vorteilhaftes Verfahren umfasst demnach folgende Schritte:
- mit Hilfe einer spanhebenden Bearbeitung wird eine Aussparung in einem Abtastbereich eines Grundkörpers einer Welle eingebracht, wobei ein vorteilhafter Querschnitt der Aussparung Rechteck-förmig oder Trapez-förmig ist;
- in die Aussparung wird eine Pufferschicht aufgebracht, insbesondere aufgeschweißt;
- nach dem Aufbringen der Pufferschicht wird der Körper wieder auf Raumtemperatur abgekühlt;
- auf die Pufferschicht wird die Messschicht aufgebracht, wobei die Messschicht vorzugsweise aufgeschweißt wird;
- nach dem Abkühlen des Körpers werden überstehende Stellen durch ein spanhebendes Verfahren ausgeglichen,
- mit Hilfe einer Ultraschall-Prüfung und/oder einer Oberflächenriss-Prüfung wird der Abtastbereich auf inhomogene Stellen geprüft.

Bei einer Welle ist die spanhebende Bearbeitung vorzugsweise drehen mit einer Drehmaschine.

Die Abtastfläche wird auch als Messfläche bezeichnet.

Als Werkstoff für den Körper, insbesondere für den Grundkörper, eignen sich folgende Stähle:
S335J2; S420N, S460Q, S460NL, S690Q, S890Q, 26NiCrMoV 14-5, und 42CrMo4;

Für die Messschicht, die durch Schweißen aufgebracht wird, eignet sich für den Schweißvorgang die Verwendung eines Ferrit-freien oder austenitischen Schweißdrahtes. Als Material für den Schweißdraht eignet sich ein Schweißdraht mit der Bezeichnung: 1.3954.

Zum Aufbringen der Pufferschicht eignet sich insbesondere ein MAG-Schweiß-Verfahren. Vorzugsweise wird der Bereich, auf dem die Pufferschicht aufgebracht wird, vorgewärmt.

Die Welle ist insbesondere eine Welle eines Rotors einer elektrischen Maschine. Die Welle weist einen Grundkörper, eine Pufferschicht und eine Messschicht auf, wobei die Welle einen Abtastbereich aufweist, wobei die Pufferschicht und die Messschicht in dem Abtastbereich angeordnet sind, wobei die Pufferschicht zwischen dem Grundkörper und der Messschicht angeordnet ist, wobei die Messschicht ein austenitisches Material, insbesondere einen nicht-ferromagnetischen Chrom-Nickelstahl, aufweist, wobei der Abtastbereich zur Abtastung durch einen Sensor vorgesehen ist.

Der Abtastbereich ist vorzugsweise derart angeordnet, dass ein Sensor eines Magnetlagers den Abtastbereich erfassen kann.

Grundlage für die Herstellung der Welle ist vorzugsweise der Grundkörper, wobei der Grundkörper mit den Schichten beaufschlagt wird und hieraus die Welle entsteht.

Die Pufferschicht dient vorzugsweise zur festen Verbindung der Messschicht mit dem Grundkörper. Die Pufferschicht ist vorzugsweise mit einem Schweißverfahren, einem Löt-Verfahren oder einer mechanisch ausgeführten Verbindung mit dem Grundkörper der Welle verbunden. Die Pufferschicht dient vorzugsweise zum verbesserten Halt der Messschicht auf der Oberfläche des Grundkörpers.

Die Pufferschicht kann demnach ein Metall oder eine Legierung sein, welche(s) mit dem Grundkörper und dem Material der Messschicht eine feste Verbindung eingehen kann.

Vorzugsweise bedeckt die Pufferschicht die Oberfläche des Grundkörpers im Abtastbereich. Der Abtastbereich ist vorzugsweise ein ringförmiger Ausschnitt der Mantelfläche der Welle oder des Grundkörpers.

Allgemein kann für die Messschicht ein Material mit einer geringen Permeabilität gewählt werden. Vorzugsweise ist die elektrische Leitfähigkeit des Materials der Messschicht höher als die elektrische Leitfähigkeit des Materials des Grundkörpers und/oder der Pufferschicht. Vorzugsweise ist das Material der Messschicht ein Edelstahl, insbesondere ein austenitischer Edelstahl, Aluminium, Kupfer, Messing oder Bronze.

Zum Aufbringen der Pufferschicht auf der Oberfläche des Grundkörpers eignet sich insbesondere ein Löt-Verfahren (Löten), ein Schweißverfahren oder ein sonstiges Verfahren, bei dem zumindest ein Teil des Materials der Pufferschicht in flüssiger oder plastisch verformbarer (knetbarer) Konsistenz um die Oberfläche des Grundkörpers aufgebracht wird. Durch ein solches Aufbringen kann die Pufferschicht besonders leicht in die Aussparung eingefügt werden.

Zum Aufbringen der Messschicht auf der Pufferschicht eignet sich insbesondere ein Löt-Verfahren, ein Schweiß-Verfahren oder ein sonstiges Verfahren, bei dem das Material der Messschicht in flüssiger oder plastisch verformbarer Konsistenz auf die Pufferschicht aufgebracht wird.

Durch die Kombination der Pufferschicht und der Messschicht kann die Messschicht, welche eine besonders gute Abtastung der Mantelfläche der Welle im Abtastbereich ermöglicht, fest mit dem Grundkörper der Welle verbunden werden.

Vorteilhaft ist eine solche Welle für besonders hohe Drehzahlen geeignet, da die Verbindung der Schichten mit dem Grundkörper besonders fest ist.

Bei einer vorteilhaften Ausgestaltung der Erfindung weist der Grundkörper eine, in einer tangentialen Richtung, um den Grundkörper herum verlaufende, Aussparung auf, wobei die Messschicht und/oder die Pufferschicht in der Aussparung positioniert sind.

Durch eine Positionierung der Pufferschicht und optional der Messschicht in die Aussparung kann der Durchmesser der Welle im Abtastbereich gering gehalten werden. Insbesondere kann eine bündige Ausführung der Messschicht mit der Mantelfläche des Grundkörpers oder der Welle ausgebildet sein.

Falls die Pufferschicht und die Messschicht in der Aussparung positioniert sind, kann der Radius der Welle im Abtastbereich besonders genau hin-bearbeitet werden.

Vorteilhaft sind die Abmessung einer Querschnittfläche der Aussparung und/oder die Dicke der Messschicht so gewählt, dass der Radius der Welle innerhalb und außerhalb der Abtastschicht gleich gewählt werden kann.

Eine bündig ausgebildete Mantelfläche der Welle im Abtastbereich und darüber hinaus kann besonders einfach hergestellt werden.

Überdies ist die Oberfläche zwischen der Pufferschicht und der Oberfläche des Grundkörpers durch die Aussparung im Abtastbereich vergrößert. Eine vergrößerte Oberfläche führt zu einer vergrößerten Haftung der Oberfläche von dem Grundkörper an der Pufferschicht und der Messschicht.

Bei einer weiteren vorteilhaften Ausgestaltung der Erfindung ist die Pufferschicht mit einem Schweißverfahren auf den Grundkörper aufgebracht, wobei die Messschicht mit einem Schweißverfahren auf die Pufferschicht aufgebracht ist.

Schweißverfahren ermöglichen eine besonders feste Verbindung der Oberfläche des Grundkörpers mit der Pufferschicht. Weiter ist ein Aufbringen der Messschicht auf die Pufferschicht mittels Schweißen besonders einfach. Durch den flüssigen Zustand des Materials der Pufferschicht und/oder der Messschicht ist eine besonders gleichmäßige Materialablagerung möglich.

Durch ein Mischen des im Bereich der Verbindung während des Schweißens als flüssig befindlichen Metalls kann eine besonders stabile Verbindung der Materialien ermöglicht werden.

Das Aufschweißen der Pufferschicht auf die Oberfläche des Grundkörpers erfolgt vorzugsweise mit einem MAG-Schweiß-Verfahren. Auch andere Schutzgas-Schweißverfahren sind hierzu geeignet.

Das Aufschweißen der Messschicht erfolgt vorzugsweise mittels eines Unterpulver-Verfahrens.

Vorteilhaft erfolgt nach dem Aufschweißen der Messschicht ein Spannungsarm-Glühen. Hierbei wird die Welle vorzugsweise auf eine Temperatur von 500 bis 650 Grad Celsius erwärmt, so dass sich das Gefüge in der Messschicht, der Pufferschicht und/oder in dem Grundkörper entspannen kann. Ein solches Spannungsarm-Glühen erfolgt vorzugsweise vor der weiteren Bearbeitung der Welle.

Für die Messschicht eignet sich ein austenitischer Chrom-Nickelstahl mit 0,02% Kohlenstoff; 22% Chrom, 17% Nickel; 8% Mangan und 4% Molybdän. Vorzugsweise kann ein solcher Stahl weiter Stickstoff und/oder Niob aufweisen. Insbesondere eignet sich ein Schweißdraht mit der Bezeichnung 1.3954 als Material für die Messschicht. Vorzugsweise erfolgt das Aufbringen der Messschicht mit dem Pulver-Schweißverfahren.

Die Messschicht ist vorzugsweise porenfrei. Die Messschicht ist darüber hinaus vorteilhaft nicht ferromagnetisch.

Durch das Auftragen der Pufferschicht und/oder der Messschicht kann die jeweilige Schicht in die Aussparung besonders einfach eingebracht werden.

Bei einer weiteren vorteilhaften Ausgestaltung der Erfindung ist eine Mantelfläche der Messschicht bündig zur Mantelfläche des Grundkörpers oder der Welle ausgebildet.

Durch die bündige Ausgestaltung ist eine besonders einfache Erfassung der Position und/oder der Aussichtung der Welle mit dem Sensor möglich. Vorzugsweise wird die bündige Oberfläche der Welle durch spanhebendes Verfahren, insbesondere durch ein sogenanntes Abdrehen (mit einer Drehmaschine) der Welle, bereitgestellt. Selbst bei einer axialen Verschiebung der Welle führt ein zumindest weitgehend konstanter Radius der Mantelfläche nicht unmittelbar zum Ausfall des Magnetlagers, indem die Welle vorteilhaft rotierbar gelagert ist.

Bei einer weiteren vorteilhaften Ausgestaltung der Erfindung weist die Aussparung einen Trapez-förmigen, Kreissegment-förmigen oder rechteckigen Querschnitt auf.

Die Aussparung ist vorzugsweise tangential umlaufend in die Mantelfläche des Grundkörpers eingearbeitet.

Die Form der Aussparung wird vorzugsweise je nach Anforderung an die Messschicht, insbesondere deren Gleichmäßigkeit oder der notwendigen Dicke der Messschicht, gewählt.

Eine Aussparung mit Trapez-förmiger oder rechteckiger Querschnittfläche ist mittels Drehen besonders einfach herstellbar. Zum Bereitstellen der Aussparung in dem Grundkörper dient vorzugsweise eine Drehmaschine.

Bei einer weiteren vorteilhaften Ausgestaltung der Erfindung weist die Mantelfläche der Messschicht einen kleineren Radius als die Mantelfläche des Grundkörpers auf.

Mit Hilfe des verkleinerten Radius kann die Welle besonders gewichtsarm ausgebildet werden. Im Abtastbereich kann so der Abstand der Mantelfläche der Messschicht vergrößert werden.

Bei einer weiteren vorteilhaften Ausgestaltung der Erfindung weist die Mantelfläche der Messschicht einen größeren Radius als der Grundkörper auf.

Durch einen vergrößerten Radius der Mantelfläche der Messschicht kann der Abstand zwischen dem Sensor und der Mantelfläche der Messschicht verkleinert ausgebildet werden.

Bei einer weiteren vorteilhaften Ausgestaltung der Erfindung weist die Pufferschicht einen Chrom-Nickel-Stahl auf.

Vorzugsweise besteht die Pufferschicht zumindest weitgehend aus einem Chrom-Nickelstahl (CrNi-Stahl).

Vorzugsweise umfasst ein solcher CrNi-Stahl 0,3% Kohlenstoff; 0,7% Silizium; 1,4% Mangan; 23% Chrom und 12,5% Nickel.

Der Chrom-Nickelstahl wird vorzugsweise durch Schweißen auf die Oberfläche des Grundkörpers aufgebracht.

Vorzugsweise kann auch ein anderer Kohlenstoff-armer Chrom-Nickelstahl verwendet werden. Vorteilhaft weist ein solcher Chrom-Nickelstahl bis zu 1 Gew.-% Kohlenstoff, vorzugsweise unter 0,5 Gew.-% Kohlenstoff, auf.

Ein Chrom-Nickel-Stahl verbindet sich vorteilhaft zu einer festen Verbindung mit den meisten, für eine Welle geeigneten, Materialen. Überdies ist Chrom-Nickel-Stahl leicht schweißbar.

Das Verfahren zur Herstellung einer Welle mit einem Abtastbereich, wobei die Welle einen Grundkörper, eine Messschicht und eine Pufferschicht aufweist, umfasst folgende Schritte:
- aufbringen einer Pufferschicht auf den Grundkörper im Abtastbereich,
- aufbringen der Messschicht auf die Pufferschicht,
- Bearbeitung der Messschicht derart, dass eine Mantelfläche der Messschicht eine ebene Oberfläche aufweist.

Vorzugsweise werden die Oberfläche und/oder die Pufferschicht vor dem Auftragen der abdeckenden Schicht erwärmt. Nach Auftragen der Messschicht erfolgen vorzugsweise ein langsames Abkühlen und/oder ein Spannungsarmglühen.

Die Pufferschicht und/oder die Messschicht kann insbesondere durch Löten oder bevorzugt durch Schweißen auf den jeweiligen Untergrund aufgebracht werden.

Optional können auch weitere bekannte Verbindungsarten die Festigkeit der Verbindung der Schichten untereinander und/oder mit dem Grundkörper unterstützen.

Als Materialien für die Pufferschicht und/oder die Messschicht können jeweils ein gering-legierter Stahl, Kupfer, Silber, Aluminium oder eine Kupfer- oder Nickel-haltige Legierung zum Einsatz kommen.

Das Einbringen der Aussparung in den Grundkörper der Welle erfolgt vorzugsweise mittels eines spanhebenden Verfahrens, vorzugsweise Drehen.

Nach Aufbringen der Messschicht wird vorzugsweise die Mantelfläche mittels einer Drehmaschine auf einen konstanten Radius gedreht.

Bei einer weiteren vorteilhaften Ausgestaltung der Erfindung wird zur Aufbringung jeweils ein Schweißverfahren verwendet. Als Schweißverfahren zum Aufbringen der Pufferschicht eignet sich insbesondere ein MAG-Schweißverfahren.

Als Schweißverfahren zum Aufbringen der Messschicht eignet sich insbesondere ein Pulver-Schweißverfahren.

Vorzugsweise erfolgt das Schweißverfahren unter einem geeigneten nicht-reaktiven Schutzgas wie Argon. Alternativ erfolgt das Schweißverfahren unter einem sonstigen, geeigneten Mischgas.

Vorzugsweise erfolgt das Aufbringen der Pufferschicht in mehreren Lagen. Vorteilhaft wird zunächst eine erste Lage auf den Grundkörper, insbesondere auf der Innenseite der Aussparung des Grundkörpers, aufgeschweißt. Danach kann eine zweite Lage auf die erste Lage aufgeschweißt werden. Vorteilhaft deckt die zweite Lage die erste Lage ab.

Die Messschicht kann dann auf die zweite Lage aufgeschweißt werden. Vorzugsweise wird auch die Messschicht in mehreren Lagen aufgeschweißt.

Durch das Aufbringen der Pufferschicht und/oder der Messschicht mit einem Schweißverfahren kann eine besonders feste Verbindung bereitgestellt werden. Darüber hinaus ist eine Messschicht, die durch Schweißen bereitgestellt worden ist, besonders homogen ausgebildet.

Bei einer weiteren vorteilhaften Ausgestaltung der Erfindung wird als erster Schritt eine Aussparung in den Grundkörper, insbesondere mittels einer spanhebenden Bearbeitung, eingebracht, wobei die Aussparung im Abtastbereich positioniert wird.

Die Pufferschicht und/oder die Messschicht kann auf der Mantelfläche eines Grundkörpers mit einem konstanten Radius aufgebracht werden. In diesem Fall stehen die Pufferschicht und die Messschicht im Abtastbereich über die Mantelfläche heraus.

Die Pufferschicht und/oder die Messschicht können jeweils in der Aussparung positioniert sein. In dieser Ausgestaltung ist die Mantelfläche im Abtastbereich vorzugsweise bündig mit der Mantelfläche des Grundkörpers außerhalb des Abtastbereichs ausgebildet.

In einer weiteren vorteilhaften Ausgestaltung kann auch die Mantelfläche der Messschicht im Abtastbereich mit einem kleineren Durchmesser als die Mantelfläche des Grundkörpers außerhalb des Grundkörpers ausgebildet sein.

Bei einer weiteren Bearbeitung der Welle kann die Aussparung bei einem Plandrehen der Welle vor der weiteren Bearbeitung eingebracht werden. So muss die Welle nicht mehrmals in eine Drehmaschine eingespannt werden. Durch diese Ausgestaltung der Erfindung kann eine Welle mit einer besonders glatten Mantelfläche hergestellt werden.

Eine bevorzugte Anwendung der Erfindung ist ein Rotor einer elektrischen Maschine. Der Rotor umfasst gemäß der bevorzugten Anwendung eine hier beschriebene Welle.

Die Welle wird vorzugsweise nach dem vorstehend ausgeführten Herstellungsverfahren mit einem Blechpaket beaufschlagt. Der Rotor umfasst also zumindest das Blechpaket und die Welle.

Die Welle kann auch als Grundlage für einen drehenden Körper in einer Zentrifuge, einer Turbine, oder einer (Turbo-) Pumpe, vorgesehen sein.

### Beschreibung der elektrischen Maschine

**(PA13)** Die elektrische Maschine weist zumindest ein Magnetlager auf, wobei das Magnetlager einen Sensor aufweist, wobei das Magnetlager zur Aufnahme der vorstehend beschriebenen Welle ausgebildet ist, wobei der Sensor zur Bestimmung der Position und/oder der Ausrichtung der Welle vorgesehen ist, wobei der Sensor im Bereich des Abtastbereiches der Welle angeordnet ist.

Die Welle kann Grundlage für den Rotor einer elektrischen Maschine sein. Die elektrische Maschine weist vorzugsweise zwei Magnetlager für den Rotor bzw. für die Welle auf. Das jeweilige Magnetlager kann die Welle bzw. den Rotor aufgrund der besonders gleichmäßigen und festen Messschicht besonders gut in einer mittleren Position und Ausrichtung halten.

Als Sensor des Magnetlagers dient vorzugsweise ein Wirbelstrom-Sensor. Der Sensor weist vorzugsweise ein induktives Element auf. Ein solcher Sensor ist vorzugsweise dazu ausgebildet, eine Änderung der Impedanz zu messen, um so eine Änderung der Verschiebung der Messschicht und somit der Welle bestimmen zu können.

Im Folgenden wird die Erfindung anhand von Figuren näher ausgeführt und erläutert. Die in den Figuren gezeigten Ausführungsformen sind lediglich beispielhaft und schränken die Erfindung nicht ein. In den Figuren gezeigte Merkmale sind zu neuen Ausführungsformen der Erfindung kombinierbar.

Es zeigen:
- FIG 1: eine Welle,
- FIG 2: eine Welle mit einer Aussparung,
- FIG 3: eine Welle mit einer Pufferschicht,
- FIG 4: eine Welle mit einer Messschicht,
- FIG 5: eine Welle mit überstehender Messschicht,
- FIG 6: eine Welle mit Aussparung und Messschicht, sowie
- FIG 7: eine elektrische Maschine mit einem Magnetlager.

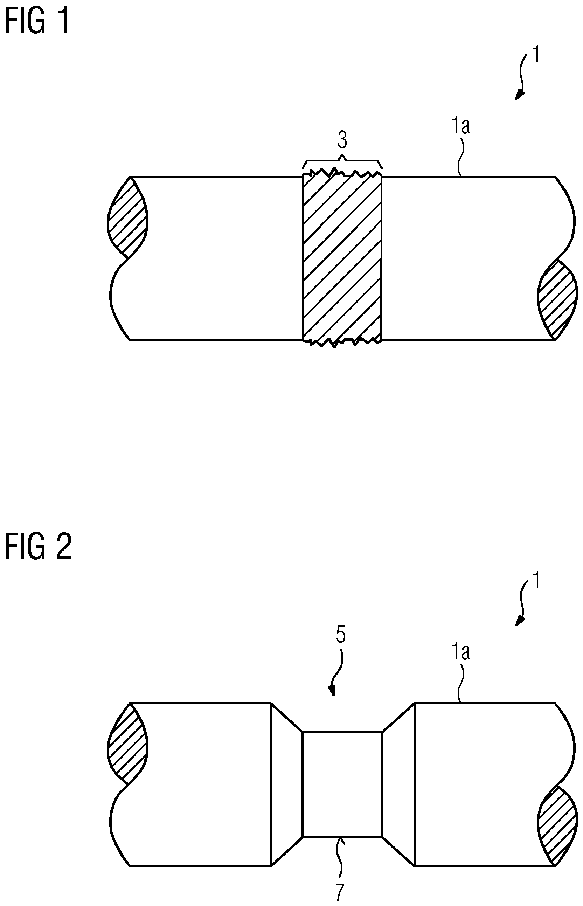

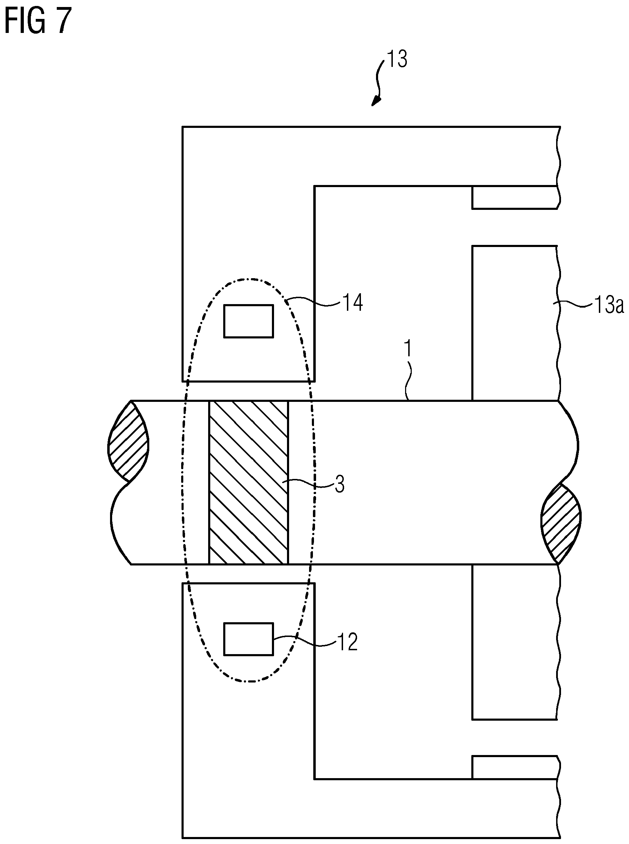

**FIG 1** zeigt eine Welle 1. Die Welle 1 ist Zylinder-förmig ausgebildet. Grundlage für die Welle ist ein Grundkörper 1a. Der Grundkörper 1a und die Schichten 9, 11 bilden die Welle 1. Die Welle 1 weist einen Abtastbereich 3 auf. Der Abtastbereich 3 dient zur Abtastung der Welle 1 mit einem Sensor 12 (lediglich in FIG 7 dargestellt). Vorzugsweise ist der Abtastbereich 3 mit einem Sensor 12 derart abtastbar, dass die Ausrichtung und die Position der Welle 1 ermittelbar sind. Der Abtastbereich 3 steht bereichsweise über die Mantelfläche der Welle 1 heraus. Die Figur zeigt die Welle vor einem letzten "Abdrehen" der bereichsweise überstehenden Messschicht 11.

**FIG 2** zeigt eine beispielhafte Welle 1. Die Welle 1 umfasst einen Grundkörper 1a, wobei der Grundkörper 1a eine Aussparung 5 aufweist. Die Welle 1 entspricht hier dem Grundkörper 1a und beide sind rotationssymmetrisch ausgebildet. Die Aussparung 5 ist vorzugsweise mit Hilfe einer Drehmaschine, also mittels einer spanhebenden Bearbeitung in den Grundkörper 1a eingebacht. Die Aussparung 5 ist hier Trapez-förmig ausgebildet. Die Aussparung 5 kann jedoch auch einen rechteckigen Querschnitt oder einen Halbkreis-förmigen Querschnitt aufweisen. Die Aussparung 5 weist eine Oberfläche 7 auf. Die Oberfläche 7 und die Aussparung 5 sind im Abtastbereich der Welle 1 angeordnet. Die Aussparung 5 ist im Abtastbereich 3 angeordnet.

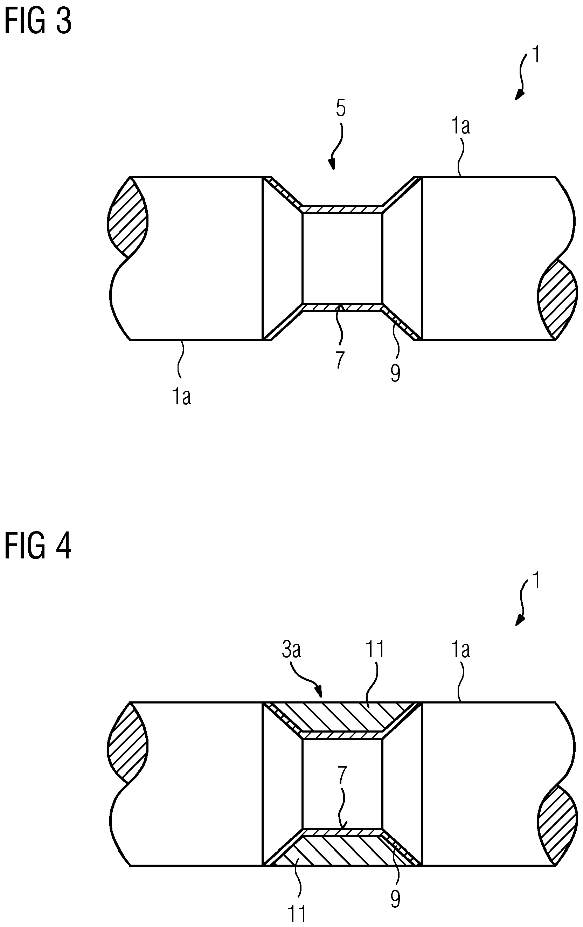

**FIG 3** zeigt eine Welle 1 mit einer Pufferschicht 9. Die Pufferschicht 9 ist auf die Oberfläche 7 in der Aussparung 5 aufgebracht. Die Pufferschicht 9 ist vorzugsweise mit einem Schweiß-Verfahren auf die Oberfläche 7 aufgebracht. Die Pufferschicht 9 wird vorzugsweise auf die Oberfläche 7 in der Aussparung 5 des Grundkörpers 1a aufgebracht, nachdem dieser zumindest im Abtastbereich 3 erwärmt worden ist.

Die Pufferschicht 9 umfasst vorteilhaft zumindest zwei Lagen (nicht in der FIG gezeigt). Die erste Lage bedeckt die Oberfläche 7 der Aussparung 5. Die zweite Lage bedeckt vorteilhaft die erste Lage.

Die Pufferschicht 9 ist vorzugsweise derart aufgebracht, dass die die Oberfläche 7 vollständig von der Pufferschicht 9 abgedeckt wird.

**FIG 4** zeigt eine Welle 1 mit einer Messschicht 11. Die Messschicht 11 ist vorzugsweise mit Hilfe eines Schweiß-Verfahrens auf die Pufferschicht 9 aufgebracht. Die Pufferschicht 9 dient zur festen Verbindung zwischen der Oberfläche 5 des Grundkörpers 1a und der Messschicht 11. Die Messschicht 11 ist vorzugsweise aus einem nicht-ferromagnetischen Material, vorzugsweise aus einem austenitischen Material, ausgebildet.

Als Material für die Messschicht 11 eignet sich beispielhaft ein austenitischer Chrom-Nickelstahl mit einem niedrigen Kohlenstoffgehalt.

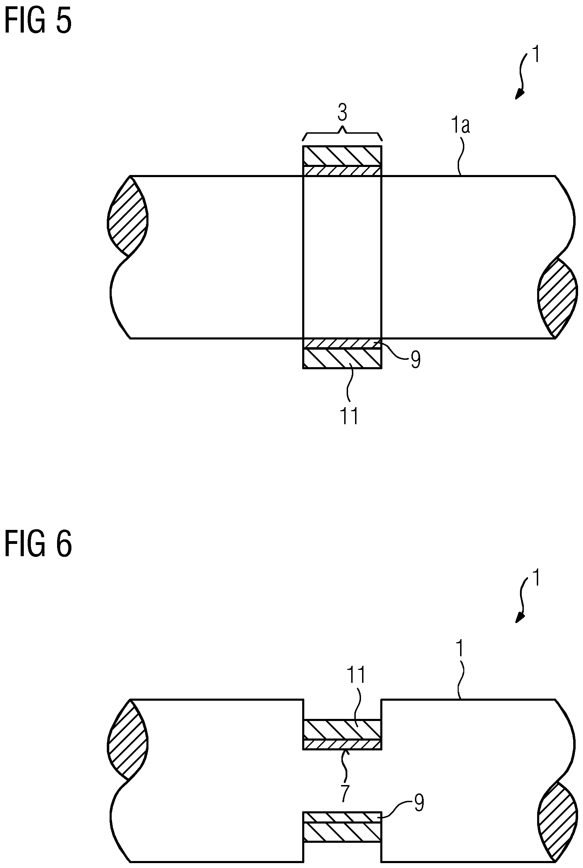

**FIG 5** zeigt eine Welle 1 mit überstehender Messchicht 11. Die Messschicht 11 ist mit einer Pufferschicht 7 auf dem Grundkörper 1a aufgebracht. Im Unterschied zu den vorangehenden Figuren ist in dieser beispielhaften Ausgestaltung der Welle 1 keine Aussparung 5 im Abtastbereich 3 angeordnet. Die Pufferschicht und die Messschicht 11 sind auf der Mantelfläche eines Zylinder-förmigen Grundkörpers 1a aufgebracht.

Die Pufferschicht 9 dient zur festen Verbindung der Oberfläche 7 des Körpers 1 mit der Messschicht 11. Die Mantelfläche der Messschicht 11 bildet den Abtastbereich 3. Die Mantelfläche der Messschicht 11 bei der Welle 1 weist einen größeren Radius auf als die Welle 1 selbst.

**FIG 6** zeigt eine Welle 1 mit Aussparung 5 und Messschicht 11. Die Messschicht 11 ist über die Pufferschicht 9 mit der Oberfläche der Aussparung 5 verbunden. Die Aussparung 5 weist einen rechteckigen Querschnitt auf. Der Querschnitt ist rotationssymmetrisch im Abtastbereich 3 des Grundkörpers 1a der Welle 1 eingebracht.

Der Radius einer Mantelfläche der Messschicht 11 ist geringer als der Radius der Mantelfläche des weiteren Grundkörpers 1a der Welle 1 ausgebildet.

**FIG 7** zeigt eine elektrische Maschine 13 mit einem Magnetlager 14. Das Magnetlager 14 dient zur drehbaren Lagerung der Welle 1. Das Magnetlager umfasst einen Sensor 12, wobei der Sensor 12 zur Bestimmung der Position und/oder der Ausrichtung der Welle 1 vorgesehen ist. Das Magnetlager 14 ist in dem eingekreisten Bereich des Gehäuses der elektrischen Maschine 13 positioniert. Die Welle 1 ist Teil eines Rotors 13a der elektrischen Maschine 13. Der Sensor 12 ist so positioniert, dass der Sensor 12 den Abtastbereich 3 der Welle 1 erfasst.

Zusammenfassend betrifft die Erfindung eine Welle 1 mit einem Abtastbereich 3. Die Welle 1 ist vorteilhaft Teil einer elektrischen Maschine 13 mit einem Magnetlager 14. Der Abtastbereich 3 der Welle 1 ist als Mantelfläche einer Messschicht 11 ausgebildet. Die Messschicht 11 ist mit der Oberfläche 7 eines Grundkörpers 1a der Welle 1 über eine Pufferschicht 9 verbunden. Die Pufferschicht 9 und die Messschicht 11 werden vorzugsweise mit Hilfe eines Schweiß-Verfahrens auf die Oberfläche 7 des Grundkörpers 1a beziehungsweise auf die Pufferschicht 9 aufgebracht. Die Messschicht 11 ist vorzugsweise aus einem austenitischen Material ausgebildet. Vorzugsweise sind die Pufferschicht 9 und die Messschicht 11 in einer Aussparung 5 des Grundkörpers 1a der Welle positioniert, so dass die Welle 1 eine Mantelfläche mit konstantem Radius und einer bündigen Oberfläche aufweist.

## Patentansprüche

1. Welle (1), insbesondere eines Rotors (13a) einer elektrischen Maschine (13), aufweisend einen Grundkörper (1a), eine Pufferschicht (9) und eine Messschicht (11), wobei die Welle (1) einen Abtastbereich (3) aufweist, wobei die Pufferschicht (9) und die Messschicht (11) in dem Abtastbereich (3) angeordnet sind, wobei die Pufferschicht (9) zwischen dem Grundkörper (1a) und der Messschicht (11) angeordnet ist, wobei die Messschicht (11) ein austenitisches Material, insbesondere einen nicht-ferromagnetischen Chrom-Nickelstahl, aufweist, wobei der Abtastbereich (3) zur Abtastung durch einen Sensor (12) vorgesehen ist.

2. Welle (1) nach Anspruch 1, wobei der Grundkörper (1a) eine, in einer tangentialen Richtung um den Grundkörper (1a) herum verlaufende, Aussparung (5) aufweist, wobei die Messschicht (11) und/oder die Pufferschicht (9) in der Aussparung (5) positioniert sind.

3. Welle (1) nach einem der vorangehenden Ansprüche, wobei die Pufferschicht (9) mit einem Schweißverfahren auf den Grundkörper (1a) aufgebracht ist, wobei die Messschicht (11) mit einem Schweißverfahren auf die Pufferschicht (9) aufgebracht ist.

4. Welle (1) nach einem der vorangehenden Ansprüche, wobei eine Mantelfläche der Messschicht (11) bündig zur Mantelfläche des Grundkörpers (1a) ausgebildet ist.

5. Welle (1) nach einem der Ansprüche 2 bis 4, wobei die Aussparung (5) einen Trapez-förmigen, Kreissegment-förmigen oder rechteckigen Querschnitt aufweist.

6. Welle (1) nach einem der Ansprüche 2 bis 5, wobei die Mantelfläche der Messschicht (11) einen kleineren Radius als die Mantelfläche des Grundkörpers (1a) aufweist.

7. Welle (1) nach einem der vorangehenden Ansprüche (außer 4), wobei die Mantelfläche der Messschicht (11) einen größeren Radius als der Grundkörper (1a) aufweist.

8. Welle nach einem der vorangehenden Ansprüche, wobei die Pufferschicht (9) einen Chrom-Nickel-Stahl aufweist.

9. Verfahren zur Herstellung einer Welle (1) mit einem Abtastbereich (3), wobei die Welle (1) einen Grundkörper (1a), eine Messschicht (11) und eine Pufferschicht (9) aufweist, umfassend folgende Schritte:
- aufbringen einer Pufferschicht (9) auf den Grundkörper (1a) im Abtastbereich (3),
- aufbringen der Messschicht (11) auf die Pufferschicht (9),
- Bearbeitung der Messschicht (11) derart, dass eine Mantelfläche der Messschicht (11) eine ebene Oberfläche aufweist.

10. Verfahren nach Anspruch 9, wobei zur Aufbringung jeweils ein Schweißverfahren verwendet wird.

11. Verfahren nach Anspruch 9 oder 10, wobei als erster Schritt eine Aussparung (5) in den Grundkörper (1a), insbesondere mittels einer spanhebenden Bearbeitung, eingebracht wird, wobei die Aussparung im Abtastbereich (3) positioniert wird.

12. Rotor (13a) einer elektrischen Maschine (13), aufweisend eine Welle (1) nach einem der Ansprüche 1 bis 8.

13. Elektrische Maschine (13) mit zumindest einem Magnetlager (14), wobei das Magnetlager (14) einen Sensor (12) aufweist, wobei das Magnetlager (14) zur Aufnahme der Welle (1) nach einem der Ansprüche 1 bis 8 ausgebildet ist, wobei der Sensor (12) zur Bestimmung der Position und/oder der Ausrichtung der Welle (1) vorgesehen ist, wobei der Sensor (13) im Bereich des Abtastbereiches (3) der Welle (1) angeordnet ist.
